# EUROPÄISCHE PATENTANMELDUNG

(11) **EP 0 529 332 A1**
(43) Veröffentlichungstag der Anmeldung: **03.03.1993**
(21) Anmeldenummer: 92112902.9
(22) Anmeldetag: 29.07.1992
(51) Int. Cl.: C02F 1/72

(54) **Verfahren zum automatisch steuerbaren Absenken des Nitritgehalts nitrithaltiger wässriger Lösungen auf Werte unter 1 mg/1**

(30) Priorität: 23.08.1991 DE 4127980
(71) Anmelder: Degussa Aktiengesellschaft, D-60311 Frankfurt (DE)
(72) Erfinder: Fischer, Joachim, W-6458 Rodenbach (DE); Wolf, Hubert, W-6451 Hammersbach (DE); Stützel, Klaus, W-6000 Frankfurt 60 (DE); Brandner, Friedhelm, W-6460 Gelnhausen 2 (DE); Diehl, Manfred, Dr., W-6000 Frankfurt 60 (DE)

(57) **Zusammenfassung**

Das Absenken des Nitritgehalts wäßriger Lösungen durch Behandlung mit Wasserstoffperoxid im sauren pH-Bereich läßt sich durch Messung des Redoxpotentials steuern. Entgegen der Lehre des Standes der Technik wird im erfindungsgemäßen Verfahren die Zugabe des Wasserstoffperoxids nicht im Bereich des höchsten Redoxpotentials, sondern erst nach Absenken des Potentials auf einen Wert von 650±10 mV beendet. Auf diese Weise lassen sich Nitritgehalte unter 1 mg/l auch dann erhalten, wenn die Lösungen zusätzlich wechselnde Mengen unterschiedlicher, durch H₂O₂ oxidierbarer Inhaltsstoffe enthalten.

## Beschreibung

Die Erfindung betrifft ein Verfahren zum automatisch steuerbaren Absenken des Nitritgehalts nitrithaltiger wäßriger Lösungen, insbesondere Abwässern und Beizsäuren, auf Werte unter 1 mg NO₂⁻/l durch Behandlung der Lösungen bei einem pH-Wert unter 3,5 mit Wasserstoffperoxid, dessen Zugabe über das Redoxpotential gesteuert wird. Das Verfahren umfaßt auch die Behandlung solcher nitrithaltiger wäßriger Lösungen, welche außer Nitrit andere durch Wasserstoffperoxid oxidierbare Inhaltsstoffe enthalten.

Ein Verfahren zur automatisch steuerbaren Entgiftung von Nitritionen enthaltenden Abwässern, bei dem die Nitritionen im schwachsauren pH-Bereich mittels Wasserstoffperoxid zu Nitrationen oxidiert werden, ist aus der DE-PS 28 52 475 bekannt. Hier wird die Absenkung des pH-Wertes während der Oxidation zur Steuerung der H₂O₂-Dosierung genutzt. Dieses Verfahren eignet sich für die Entgiftung im Standverfahren, nicht jedoch zur Behandlung großer Abwasserströme mit wechselnden Gehalten unterschiedlicher, mit H₂O₂ oxidierbarer Inhaltsstoffe im sogenannten Durchlaufverfahren.

In der EP-A 0 267 166 wird ein Verfahren zur Reduktion von NOₓ-Gas aus einer "gelöstes NOₓ" enthaltenden salpetersauren Lösung durch Behandlung der Lösung mit Wasserstoffperoxid offenbart, wobei die Steuerung der Zugabemenge von Wasserstoffperoxid in Abhängigkeit vom Redoxpotential erfolgt. Aus der Figur 1 dieses Dokuments ist der Verlauf des Redoxpotentials in Abhängigkeit vom Gehalt an "gelöstem NOₓ", das salpetrige Säure, N₂O₃, NO und NO₂ umfaßt, zu entnehmen: Hiernach steigt das Redoxpotential mit abnehmendem Gehalt an gelöstem NOₓ an und erreicht bei vollständiger Oxidation, also einem NOₓ-Gehalt von Null, ein Maximum von +855 mV; bei weiterer H₂O₂-Zugabe sinkt das Redoxpotential der H₂O₂ im Überschuß enthaltenden Lösung auf +650 mV ab.

Entgegen der in der EP-A 0 267 166 gegebenen Lehre wurde nun festgestellt, daß gemäß dem Verfahren dieses Dokuments mit Wasserstoffperoxid behandeltes nitrithaltiges Abwasser am Punkt des maximalen Redoxpotentials, dieser liegt in Abhängigkeit von der Säurekonzentration im Bereich von +850±30 mV, nicht frei von salpetriger Säure ist und somit nach Neutralisation Nitrit im Abwasser verbleibt und zu einer Umweltbelastung führt. Ganz versagt dieses Verfahren, wenn in der zu behandelnden Lösung neben Nitritionen nicht ausreichend Eisen(II)-Ionen vorliegen; in diesem Fall liegt das Anfangspotential bereits bei +850 mV, so daß nach der vorbekannten Steuerung überhaupt kein H₂O₂ dosiert und damit keine Entgiftung stattfinden würde.

Aufgabe der vorliegenden Erfindung ist, das aus der EP-A 0 267 166 bekannte Verfahren dahingehend zu verbessern, daß es ganz allgemein zur Behandlung nitrithaltiger wäßriger Lösungen, also auch solcher, welche zusätzlich wechselnde Mengen unterschiedlicher, durch H₂O₂ oxidierbarer Inhaltsstoffe, wie beispielsweise Fe²⁺ und Schwefelverbindungen niederer Oxidationssstufen, enthalten, angewandt werden kann: Hierbei sollte ein Nitritgehalt unter 1 mg NO₂⁻/l sicher erreicht werden.

Gefunden wurde ein Verfahren zum automatisch steuerbaren Absenken des Nitritgehalts nitrithaltiger wäßriger Lösungen, welche zusätzlich andere durch Wasserstoffperoxid oxidierbare Inhaltsstoffe in wechselnder Menge enthalten können, auf Werte unter 1 mg NO₂⁻/l durch kontinuierliche oder portionsweise Zugabe von Wasserstoffperoxid zu den einen pH-Wert unter 3,5 aufweisenden nitrithaltigen wäßrigen Lösungen und Beendigung der Zugabe in Abhängigkeit vom fortlaufend gemessenen Redoxpotential, das dadurch gekennzeichnet ist, daß man die Zugabe des Wasserstoffperoxids nicht im Bereich des höchsten Redoxpotentials, sondern erst nach Absenkung des Potentials auf einen Wert von 650±10 mV beendet.

Die Unteransprüche richten sich auf bevorzugte Ausführungsformen des Verfahrens.

In Kenntnis der EP-A 0 267 166 war nicht zu erwarten, daß am Punkt des höchsten Redoxpotentials Nitrit noch nicht vollständig zu Nitrat oxidiert ist, sondern erst nach Absenkung des Redoxpotentials auf einen Wert von +650±10 mV durch weitere Zugabe von Wasserstoffperoxid. Der Endpunkt der Zugabe von Wasserstoffperoxid wird also mit der sogenannten "Regelrichtung Reduktionsmitteldosierung" (= Absinken des Redoxpotentials) erreicht. Zur automatischen Steuerung der oxidativen Behandlung des Abwassers wird das Redoxpotential mittels üblicher Meßeinrichtungen fortwährend gemessen und über einen automatischen Regler die Dosiervorrichtung, im allgemeinen eine Dosierpumpe, angesteuert; von höheren Potentialwerten kommend, wird bei Erreichen des Sollwerts von 650+10 mV die H₂O₂-Zugabe abgestellt.

Für die Ansteuerung der Dosiereinrichtung für die bedarfsgerechte Zugabe von Wasserstoffperoxid - Zugabe desselben als wäßrige Lösung beliebiger Konzentration, vorzugsweise mit 30 bis 70 Gew.-% H₂O₂ - kann ein Redox-Regler mit P- (= Proportional), PI- (= Proportional-Integral) oder PID- (= Proportional-Integral-Digital) Verhalten eingesetzt werden; auch der Einsatz einer SP-Steuerung (speicherprogrammierbar) ist möglich.

Nitrit wird nicht direkt zu Nitrat oxidiert, vielmehr erfolgt die Oxidation nur bei pH-Werten unter 3,5 , und bei diesen pH-Werten liegt anstelle des Nitritions salpetrige Säure im Gleichgewicht mit Stickoxiden vor. Der "Nitritgehalt" der zu entgiftenden Lösungen umfaßt somit auch HNO₂, N₂O₃, NO und NO₂; die Nitrit-Gehaltsbestimmung erfolgt mittels bekannter Methoden, beispielsweise kolorimetrisch mittels Sulfanilsäure und Anthranilsäure.

Die Bestimmung des Redoxpotentials erfolgt unter Verwendung von Meßelektroden, welche gegenüber den sauren Bedingungen inert sind, vorzugsweise Edelmetallelektroden, insbesondere Platinelektroden. Als Bezugselektroden eignen sich beispielsweise Kalomel-, Silberchlorid- und Thalamid-Elektroden, wobei Kalomelelektroden bevorzugt werden.

Wie bereits dargelegt, erfolgt die oxidative Behandlung der nitrithaltigen wäßrigen Lösungen bei pH-Werten unter 3,5. Sofern die zu behandelnde Lösung zunächst einen pH-Wert größer 3,5 aufweist, wird vor der Behandlung ein pH-Wert kleiner 3,5 durch Zugabe von beispielsweise einer Mineralsäure eingestellt. Saure Beizlösungen, wie sie z. B. in der Edelstahlbeizerei Anwendung finden - sie enthalten Salpetersäure und Flußsäure - lassen sich direkt der erfindungsgemäßen Behandlung zum Absenken des Nitritgehalts zuführen.

Gemäß einer bevorzugten Ausführungsform erfolgt die Messung des Redoxpotentials bei einem etwa konstanten pH-Wert von 2,5±0,2. Zweckmäßigerweise wird in solchen Fällen aus dem Reaktor zur Behandlung der nitrithaltigen wäßrigen Lösung kontinuierlich ein kleiner Meßstrom abgezweigt, in diesem Meßstrom durch Zugabe von Säuren oder Basen ein pH-Wert von 2,5±0,2 aufrecht erhalten und bei diesem pH-Wert das Redoxpotential bestimmt, während im Reaktor selbst ein pH-Wert von unter 3,5 eingestellt wird. Auf diese Weise ist es möglich, Alkalilauge zur Rückneutralisation der von Nitrit befreiten Lösung einzusparen. Das erfindungsgemäße Verfahren kann sowohl im Standverfahren als auch im Durchflußverfahren durchgeführt werden.

Enthält die zu behandelnde nitrithaltige wäßrige Lösung außer Nitrit bzw. salpetriger Säure im Gleichgewicht mit den Stickoxiden zusätzlich andere durch Wasserstoffperoxid oxidierbare Inhaltsstoffe, wie beispielsweise Fe²⁺-Verbindungen oder Schwefelverbindungen in niederer Oxidationsstufe, so ist darauf zu achten, daß hierbei durch Zugabe von Wasserstoffperoxid das Redoxpotential zunächst auf einen maximalen Wert von +850±30 mV ansteigt; erst nach Überschreiten dieses Maximums und Absenkung des Redoxpotentials auf +650±10 mV erfolgt der vollständige Abbau des Nitrits auf Werte unter 1 mg NO₂/l. Nach einer bevorzugten Ausführungsform des erfindungsgemäßen Verfahrens werden vorstehend charakterisierte Lösungen in zwei Stufen mit Wasserstoffperoxid behandelt: In der ersten Stufe wird die H₂O₂-Zugabe bei Erreichen eines Potentials um +850±30 mV und in der zweiten Stufe nach Abfall des Potentials auf +650±10 mV beendet. Die Regelung der H₂O₂-Dosierung dieses zweistufigen Verfahrens erfolgt somit zunächst in Richtung "Oxidationsmittel-Dosierung" und dann in Richtung "Reduktionsmittel-Dosierung".

Wesentliche Vorteile des erfindungsgemäßen Verfahrens sind:
- Der Nitritgehalt läßt sich in zuverlässiger Weise auf Werte unter 1 mg/l absenken.
- Es lassen sich auch Lösungen mit anderen oxidierbaren Inhaltsstoffen behandeln.
- Einfache Regelung zur Behandlung kontinuierlicher Abwasserströme wechselnder Zusammensetzung.
- Es ist praktisch kein Überschuß an Wasserstoffperoxid erforderlich. Probleme, welche durch einen zu hohen Rest-H₂O₂-Gehalt verursacht werden könnten, wie beispielsweise Reoxidation von Cr³⁺ zu CrO₄⁻ nach Alkalisieren der von Nitrit befreiten Lösung oder die Bildung von Schwimmschlamm aus mit O₂-beladenem Fe(OH)₃ (O₂ aus der Zersetzung von H₂O₂) treten somit nicht auf.
- Vollständige Vermeidung einer NOₓ-Emission bei Behandlung von Beizsäuren.

Durch die nachfolgenden Beispiele wird die Erfindung verdeutlicht.

### Beispiel 1

4 l einer gebrauchten Beizsäure auf der Basis einer HNO₃ und HF-enthaltenden wäßrigen Lösung, die neben anderen Inhaltsstoffen 2500 mg NO₂⁻ und 850 mg Fe⁺⁺/l enthielt, wurde im pH-Wert nicht verändert. Durch Messung des Redoxpotentials mit einem Platin-/ Kalomel-Elektrodenpaar wurde ein Anfangspotential von +700 mV gemessen. Nun wurde aus einer Bürette langsam tropfenweise 50 gew.-%ige wäßrige H₂O₂-Lösung zudosiert. Hierbei stieg das Redoxpotential auf +870 mV an und fiel auf +840 mV ab. Nun wurde eine Probe der so behandelten Säure auf pH 6,5 rückneutralisiert und auf Nitrit untersucht. Der Nitritgehalt lag bei 400 mg NO₂⁻/l; im Bereich des höchsten Redoxpotentials ist somit die Nitritentgiftung nicht vollständig. Der Säure wurde nun so lange tropfenweise H₂O₂ zugegeben, bis das Potential von +840 mV auf +650 mV abgesunken war. Es wurde wieder eine Probe der Säure auf pH 6,5 rückneutralisiert. Der Nitritgehalt war auf kleiner 1 mg NO₂⁻/l abgesenkt; der H₂O₂-Überschuß lag bei 10 mg H₂O₂/l.

### Beispiel 2

Ein in der Anfallmenge von 2 bis 4 m³/h schwankender Abwasserstrom mit Gehalten von 200 bis 800 mg NO₂⁻/l wurde auf einen pH-Wert von 2,5 eingestellt. Durch Messung des Redoxpotentials mit einem Platin-/ Kalomel-Elektrodenpaar wurde nun über einen automatischen Regler eine Dosierpumpe angesteuert, mit der automatisch und kontinuierlich soviel H₂O₂ in das Reaktionsbecken dosiert wurde, daß im Reaktionsbecken ein Redoxpotential von +650±10 mV eingehalten wurde. Der Nitritgehalt lag stets unter 1 mg NO₂⁻/l. Der H₂O₂-Überschuß lag bei maximal 2 mg H₂O₂/l.

### Beispiel 3

Einem in der Anfallmenge von 80 bis 150 m³/h wechselnder Abwasserstrom mit Nitritgehalten von 15 bis 170 mg NO₂⁻/l und Eisengehalten von 5 bis 25 mg Fe⁺⁺/l sowie einem pH-Wert von 2-3 wurde im Zulauf zum Reaktionsbecken ein Meßstrom von 100 l/h entnommen und darin ein pH-Wert von 2,5±0,2 eingestellt.

Durch Messung des Redoxpotentials mit einer Platin-/Kalomel-Elektrodenkette in dem vorstehend konditionisierten Meßstrom wurde nun über einen automatischen Regler eine Dosierpumpe angesteuert, mit der automatisch und kontinuierlich unter Anstieg des Redoxpotentials soviel 50 gew.-%ige wäßrige Wasserstoffperoxidlösung stromaufwärts von der Meßstrom-Entnahmestelle in die Zulaufleitung dosiert wurde, daß im Zulauf zum Reaktionsbecken ein Redoxpotential von 830±20 mV aufrecht erhalten wurde. Aus dem Reaktionsbecken selbst wurde ein zweiter Meßstrom kontinuierlich entnommen und dessen pH-Wert auf 2,5±0,2 eingestellt. Durch Messung des Redoxpotentials in diesem zweiten, pH-konditionisierten Meßstrom mittels einer Platin-/Kalomel-Elektrodenkette wurde über einen automatischen Regler eine zweite Dosierpumpe zur Dosierung von 50 gew.-%iger H₂O₂-Lösung in das Reaktionsbecken angesteuert. Unter Abfall des Redoxpotentials wurde soviel H₂O₂ in das Reaktionsbecken dosiert, daß im Reaktionsbecken ein Redoxpotential von +650±10 mV aufrecht erhalten wurde. Der Nitritgehalt im Ablauf aus dem Reaktionsbecken konnte über einen Versuchszeitraum von drei Monaten stets auf Werte kleiner 1 mg NO₂⁻/l abgesenkt werden. Der H₂O₂-Überschuß im Ablauf lag bei maximal 2 mg H₂O₂/l.

## Patentansprüche

1. Verfahren zum automatisch steuerbaren Absenken des Nitritgehalts nitrithaltiger wäßriger Lösungen, welche zusätzlich andere durch Wasserstoffperoxid oxidierbare Inhaltsstoffe in wechselnder Menge enthalten können, auf Werte unter 1 mg NO₂⁻/l durch kontinuierliche oder portionsweise Zugabe von Wasserstoffperoxid zu den einen pH-Wert unter 3,5 aufweisenden nitrithaltigen wäßrigen Lösungen und Beendigung der Zugabe in Abhängigkeit vom fortlaufend gemessenen Redoxpotential,
dadurch gekennzeichnet,
daß man die Zugabe des Wasserstoffperoxids nicht im Bereich des höchsten Redoxpotentials, sondern erst nach Absenkung des Potentials auf einen Wert von 650±10 mV beendet.

2. Verfahren nach Anspruch 2,
dadurch gekennzeichnet,
daß man Wasserstoffperoxid zweistufig zudosiert, wobei die H₂O₂-Zugabe in der ersten Stufe nach Anstieg des Redoxpotentials auf einen Wert um 850±30 mV und die H₂O₂-Zugabe in der zweiten Stufe nach Abfall des Redoxpotentials auf 650±10 mV beendet wird.

3. Verfahren nach Anspruch 1 oder 2,
dadurch gekennzeichnet,
daß man die Messung des Redoxpotentials bei einem pH-Wert von 2,5±0,2 vornimmt.

4. Verfahren nach einem der Ansprüche 1 bis 3,
dadurch gekennzeichnet,
daß man aus dem Reaktor zur Behandlung der nitrithaltigen wäßrigen Lösung mit Wasserstoffperoxid kontinuierlich einen kleinen Meßstrom abzweigt und in diesem unter Aufrechterhaltung eines pH-Wertes von 2,5±0,2 das Redoxpotential bestimmt, während der pH-Wert im Reaktor auf einen Wert unter 3,5 eingestellt wird.

5. Verfahren nach einem der Ansprüche 1 bis 4,
dadurch gekennzeichnet,
daß man den Nitritgehalt von salpetersäurehaltigen Beizsäuren auf Werte unter 1 mg NO₂⁻/l absenkt.

6. Verfahren nach einem der Ansprüche 1 bis 5,
dadurch gekennzeichnet,
daß man zur Messung des Redoxpotentials ein Edelmetall/Kalomel-Elektrodenpaar verwendet.
